**Europäisches Patentamt**

**European Patent Office**

**Office européen des brevets**

(11) Veröffentlichungsnummer: **0 644 438 A2**

(12) **EUROPÄISCHE PATENTANMELDUNG**

(21) Anmeldenummer: **94114003.0**

(22) Anmeldetag: **07.09.94**

(51) Int. Cl.6: **G01S 7/288**

(30) Priorität: **16.09.93 DE 4331440**

(43) Veröffentlichungstag der Anmeldung:
**22.03.95 Patentblatt 95/12**

(84) Benannte Vertragsstaaten:
**DE FR GB**

(71) Anmelder: **Daimler-Benz Aerospace Aktiengesellschaft**

**D-81663 München (DE)**

(72) Erfinder: **Lindner, Kurt, Dipl.-Ing.**
**Stäudlenweg 14**
**D-89075 Ulm (DE)**

(74) Vertreter: **Fröhling, Werner Otto, Dr. et al**
**Daimler-Benz Aerospace AG**
**Patentabteilung**
**Sedanstrasse 10**
**D-89077 Ulm (DE)**

(54) **Radargerät.**

(57) Die Erfindung betrifft ein einkanaliges Radargerät mit selbstschwingender Mischstufe, mit einer Radarantenne, einem damit verbundenen einkanaligen Radarfrontend und einer dem Radarfrontend nachgeschalteten Auswerteschaltung.

Um auch bei solchen Radargeräten I/Q-Signalpaare für die Signalauswertung bilden zu können, wird nach der Erfindung vorgeschlagen, daß zwischen der Radarantenne und Radarfrontend ein Phasenschieber geschaltet ist, daß die Auswerteschaltung eingangsseitig zwei Signalkanäle aufweist, daß das Radarfrontend über einen Kanalumschalter mit jeweils einem der beiden Signalkanäle verbindbar ist, daß der Phasenschieber und der Kanalumschalter synchron getaktet sind und der Phasenschieber mit jedem Takt die Phase zwischen 0° und $(2n-1) \cdot (\lambda/8)$, vorzugsweise 45° umschaltet mit n gleich einer natürlichen Zahl und $\lambda$ gleich der Wellenlänge bei der Betriebsfrequenz.

Die Erfindung betrifft ein Radargerät gemäß dem Oberbegriff des Patentanspruchs 1.

In der Radartechnik ist es oft notwendig, am Empfängerausgang zwei Ausgangssignale zur komplexen Auswertung zur Verfügung zu haben. Dabei ist eines der Signale "in Phase" I und das andere in "quadrater Phase" Q, also um 90° gegenüber dem I-Signal phasenverschoben. Dies erleichtert die Signalauswertung und erlaubt sowohl die Bildung des Betragssignals sowie unter anderem das Erkennen einer Seitenbandlage zur Unterscheidung von Dopplersignalen bei der Kommt/Geht-Diskriminierung.

Teure Radargeräte weisen dabei meist serienmäßig zwei Kanäle in ihrer Auswerteschaltung auf, in denen das radarseitig empfangene Signal in jeweils ein I- bzw. ein Q-Signal aufgespalten wird und in dieser Form ausgangsseitig abgegriffen werden kann.

Für einfache Kleinradargeräte, die prinzipiell nur in einkanaliger Ausführung hergestellt werden, ist der Aufwand zur komplexen IQ-Bildung im Empfänger recht erheblich. Bei Kleinradargeräten, die beispielsweise selbstschwingende Mischstufen mit nur einem einzigen Element zur Schwingungserzeugung und gleichzeitigen Mischung aufweisen, war es bisher unmöglich, ein IQ-Signalpaar zu bilden, wobei allgemein Radargeräte mit IQ-Bildung I/Q-Radargeräte genannt werden.

Der Erfindung liegt nunmehr die Aufgabe zugrunde, ein einkanaliges Radargerät zu schaffen, bei dem auf möglichst einfache Art ein IQ-Signalpaar gebildet werden kann.

Die erfindungsgemäße Lösung der Aufgabe wird durch die kennzeichnenden Merkmale des Patentanspruchs 1 wiedergegeben. Die weiteren Ansprüche enthalten vorteilhafte Aus- und Weiterbildungen der Erfindung.

Erfindungsgemäß wird die Aufgabe dadurch gelöst, daß zwischen der Radarantenne und Radarfrontend ein Phasenschieber geschaltet ist, daß die Auswerteschaltung eingangsseitig zwei Signalkanäle aufweist, daß das Radarfrontend über einen Kanalumschalter mit jeweils einem der beiden Signalkanäle verbindbar ist, daß der Phasenschieber und der Kanalumschalter synchron getaktet sind und der Phasenschieber mit jedem Takt die Phase zwischen 0° und $(2n-1) \cdot (\lambda/8)$, vorzugsweise 45° umschaltet mit n gleich einer natürlichen Zahl und $\lambda$ gleich der Wellenlänge bei der Betriebsfrequenz.

Wesentliche Vorteile dieser Lösung bestehen darin,

- daß mit geringem Aufwand ein einkanaliges Radargerät mit selbstschwingender Mischstufe realisiert werden kann, bei dem zur besseren Signalauswertung I/Q-Signalpaare gebidet werden können;

- daß die Amplitudengleichlaufeigenschaften der I/Q-Signalpaare automatisch optimal sind, da die I- und Q-Signale vom gleichen Radarfrontend-Empfangsteil abgeleitet werden;

- daß durch leichtes Variieren der Phasenschiebereinstellung sich die Phasenorthogonalität exakt einstellen bzw. durch eine nachgeschaltete Signalanalyse automatisch regeln läßt;

- daß sie sich auch zum nachträglichen Umrüsten älterer Geräte ohne Änderung des bestehenden Radarfrontends eignet.

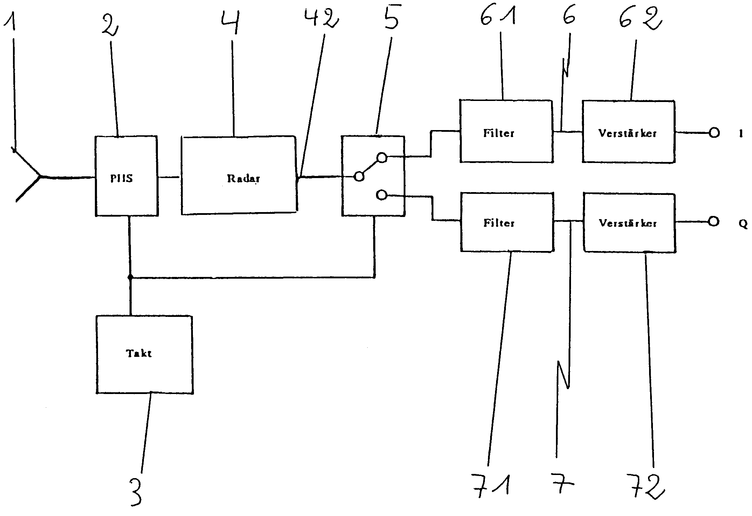

Anhand der Figur sei nachfolgend exemplarisch die Erfindung verdeutlicht.

Die Figur zeigt dabei eine bevorzugte Ausführungsform des erfindungsgemäßen Radargeräts. Zu erkennen ist die Radarantenne 1 und das Radarfrontend 4.

Zwischen die Radarantenne 1 und das Radarfrontend 4 ist ein Phasenschieber 2 geschaltet, der über einen Taktgenerator 3 angesteuert wird. Am Ausgang 42 des Radargeräts 4 ist ein Kanalumschalter 5 realisiert, der über den selben Taktgenerator 3 angesteuert wird und dabei im CHOP-Betrieb (taktgesteuerte Kanalumschaltung) arbeitet. Hierdurch wird im Takt des Taktgenerators 3 der Ausgang 42 des Radarteils 4 taktabhängig jeweils auf einen der Signalkanäle 6, 7 der Auswerteschaltung aufgeschaltet. Die Kanäle bestehen dabei aus jeweils einem Filter 61 bzw. 71 zur Empfangssignalglättung und einem sequenziell folgenden Verstärker 62 bzw. 72, an deren jeweiligen Ausgang das Empfangssignal des Radarfrontends 4 in I- bzw. Q-Lage ausgegeben wird.

Prinzipiell funktioniert das Ausführungsbeispiel gemäß der Figur wie folgt:
Der Phasenschieber 2 zwischen der Radarantenne 1 und dem Radarfrontend 4 wird im Takt des Taktgenerators 3 in eine Phasenlage taktabhängig umgeschaltet. Durch gleichzeitiges Umschalten der Phase des Phasenschiebers 2 in eine Phasenlage 0° bzw. 45° (oder allgemein: $(2n-1) \cdot (\lambda/8)$ mit n gleich einer natürlichen Zahl und $\lambda$ gleich der Wellenlänge bei der Betriebsfrequenz) und des Ausgangs 42 des Radarfrontends 4 durch den Kanalumschalter 5 wird jeweils ein Teil des Empfangssignals des Radarfrontends 4 in der I- und Q-Lage gebildet. Zu berücksichtigen ist dabei, daß das Sendesignal, welches auch den Phasenschieber 2 durchläuft, ebenso um 45° verschoben wird, so daß zwischen den getakteten Empfangssignalen insgesamt eine Phasenlage von 90° entsteht.

Die nach dem Kanalumschalter 5 als getaktete Werte anstehenden Signale werden jeweils durch den Filter 61 bzw. 71 geglättet und von der Umtastfrequenz befreit. In bekannter Weise muß die Umtastung schneller als die höchste Signalfrequenz sein. Die gefilterten Signale werden anschließend in den Verstärkern 62 bzw. 72 verstärkt und einer (nicht gezeigten) Signalauswertung zugeführt.

Die Vorteile dieser Anordnung bestehen darin, daß die Amplitudengleichlaufeigenschaften zwangsläufig optimal sind, da I- und Q-Werte vom gleichen Empfangsteil abgeleitet werden. Ferner läßt sich die Phasenortogonalität durch leichtes Variieren am Phasenschieber 2 exakt einstellen und ist z. B. durch eine Steuerung mit integrierter Signalanalyse regelbar.

**Patentansprüche**

1. Einkanaliges Radargerät mit selbstschwingender Mischstufe, mit einer Radarantenne, einem damit verbundenen einkanaligen Radarfrontend und einer dem Radarfrontend nachgeschalteten Auswerteschaltung, <u>dadurch gekennzeichnet,</u>

    - daß zwischen der Radarantenne (1) und Radarfrontend (4) ein Phasenschieber (2) geschaltet ist;
    - daß die Auswerteschaltung eingangsseitig zwei Signalkanäle (6, 7) aufweist;
    - daß das Radarfrontend (4) über einen Kanalumschalter (5) mit jeweils einem der beiden Signalkanäle (6, 7) verbindbar ist;
    - daß der Phasenschieber (2) und der Kanalumschalter (5) synchron getaktet sind und der Phasenschieber (2) mit jedem Takt die Phase zwischen 0° und $(2n-1) \cdot (\lambda/8)$, vorzugsweise 45° umschaltet mit n gleich einer natürlichen Zahl und $\lambda$ gleich der Wellenlänge bei der Betriebsfrequenz.

2. Radargerät nach Anspruch 1, dadurch gekennzeichnet, daß der Phasenschieber (2) und der Kanalumschalter (5) mit einem gemeinsamen Taktgenerator (3) verbunden sind.

3. Radargerät nach einem der Ansprüche 1 oder 2, dadurch gekennzeichnet, daß die beiden Signalkanäle (6, 7) jeweils einen Filter (61, 71) und einen Verstärker (62, 72) aufweisen.

PHS

Radar

Takt

Filter

Verstärker

Filter

Verstärker

I

Q

EP 0 644 438 A2